# EUROPÄISCHE PATENTSCHRIFT

(11) **EP 1 400 063 B1**
(45) Veröffentlichungstag und Bekanntmachung des Hinweises auf die Patenterteilung: **23.03.2005**
(21) Anmeldenummer: 02740368.2
(22) Anmeldetag: 22.05.2002
(51) Int. Cl.: H04L 12/26, H04Q 3/00

(54) **FEHLERTOLERANTER VERBINDUNGSTEST**
ERROR-TOLERANT CONNECTION TEST
TEST DE COMMUNICATION TOLERANT AUX ERREURS

(30) Priorität: 29.06.2001 DE 10131533
(43) Veröffentlichungstag der Anmeldung: 24.03.2004
(73) Patentinhaber: SIEMENS AKTIENGESELLSCHAFT, 80333 München (DE)
(72) Erfinder: SPIES, Jörgen, 81247 München (DE); WUTTKE, Birgit, 82110 Germering (DE)
(86) Internationale Anmeldenummer: PCT/DE2002/001851
(87) Internationale Veröffentlichungsnummer: WO 2003/005688

(56) Entgegenhaltungen:
- EP-A- 0 347 360
- EP-A- 0 403 414
- EP-A- 0 909 056

## Beschreibung

Die vorliegende Erfindung betrifft eine Testanordnung und ein Testverfahren in einem Knoten eines Kommunikationsnetzes zum Testen von Kommunikationsverbindungen zu anderen Knoten des Kommunikationsnetzes.

In Kommunikationsnetzen werden beim Aufbau und während des Betriebs von Verbindungen zum Beispiel bei Internetverbindungen oder Verbindungen mit dem Zeichengabesystem Nr. 7 (SS7 Protokoll Signalling System 7) Testmeldungen bzw. Testnachrichten zwischen den Knoten des Netzes ausgetauscht. Hierbei wird zum Beispiel geprüft, ob die Verbindung zwischen zwei Knoten physikalisch noch besteht, die Übertragungsgüte der Verbindung akzeptabel ist und die Datenkonsistenz zwischen den beiden Knoten übereinstimmt. Ist der Test nicht erfolgreich, wird die Verbindung in der Regel ab und zum Beispiel über andere Knoten neu aufgebaut. Einem solchen Umbau der Verbindung gehen sehr komplexe Steuerungs- und Signalisierungsvorgänge voraus, die das Netz stark belasten, insbesondere wenn der Knoten bereits durch hohen Nachrichtenverkehr stark belastet ist.

Bei einem Test sendet ein Knoten über die bestehende Verbindung zu einem anderen Knoten Testnachrichten und empfängt von diesem eine Antwort darauf bzw. eine Quittung seiner Testnachricht. Aufgrund interner Probleme in einem Knoten kann es vorkommen, daß eine eingehende Antwort bzw. eine Quittung nicht ausgewertet werden kann. Tritt zum Beispiel in einem Knoten eine Überlastung auf, weil mehr Nachrichten ankommen als verarbeitet werden können, kann ein Nachrichtenverlust eintreten und die eingegangene Quittung verloren gehen. Weiterhin ist es möglich, daß die zu sendende Testnachricht bereits innerhalb des Knoten verloren geht und nicht gesendet wird. Das Fehlen einer Antwort auf die gesendete Testnachricht kann jedoch zu dem Urteil führen, daß die Verbindung physikalisch nicht mehr besteht, worauf die Verbindung abgebaut wird, obwohl die Verbindung nicht gestört sein kann.

Zur Überwindung dieses Problems ist es bekannt, bei einem Ausbleiben einer Antwort auf eine Testmeldung, die Testmeldung nach einer Wartezeit t ein zweites Mal zu senden, wie es zum Beispiel im ITU Standart in der Spezifikation Q.707 für den periodischer Link Test festgelegt ist.

Dokument EP-A-0 347 360 beschreibt eine Testanordnung in einem Knoten eines Kommunikationsnetzes. Die Anordnung prüft, ob sich eine Störung innerhalb eines Knotens oder auf einer Verbindung zwischen den Netzknoten ereignet hat.

Die der Erfindung zugrunde liegende Aufgabe besteht darin, ein Testverfahren bzw. eine Testanordnung in einem Knoten eines Kommunikationsnetzes zum Testen von Kommunikationsverbindungen zu anderen Knoten des Kommunikationsnetzes zu schaffen, die die Verfügbarkeit der getesteten Kommunikationsverbindung erhöhen können.

Diese Aufgabe wird gemäß den Merkmalen des Patentanspruchs 1 bzw. 5 gelöst. Somit wird vor einem Auslösen des Abbaus der getesteten Verbindung geprüft, ob sich ein Datenverlust innerhalb des Knotens beim Senden der Testnachricht oder Empfangen der Antwort auf die Testnachricht ereignet hat und der Abbau der Verbindung bei einem erkannten Datenverlust nicht ausgelöst. Gemäß der vorliegenden Erfindung werden wichtige interne Systeminformationen des Knotens, die einen Datenverlust anzeigen wie zum Beispiel ein Überlauf des Datenpuffers, in die Bewertung der Netzverbindung einbezogen. Hierdurch können Fehlinterpretationen verhindert, die Verfügbarkeit der Verbindung erhöht und ein unnötiger Abbau bei einem Fehlen der Antwort auf eine gesendete Testnachricht verhindert werden. Zur Bewertung der Netzverbindung können auch Systeminformationen des Partnerknotens einbezogen werden. Das Testverfahren kann in einfacher Weise in die entsprechenden Softwarefunktionseinheiten eines Knotens implementiert werden.

Die Erfindung wird durch die Merkmale der abhängigen Ansprüche weitergebildet.

Die vorliegende Erfindung wird nachfolgend an Hand von Beispielen unter Bezug auf die beigefügten Zeichnungen näher erläutert, in denen zeigen
Fig. 1 ein Beispiel für den schematischen Aufbau der erfindungsgemäßen Testanordnung in einem Knoten und
Fig. 2 ein Flußdiagramm mit dem erfindungsgemäßen Testverfahren.

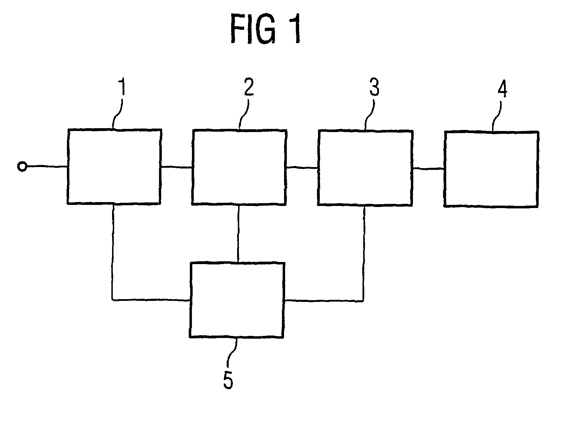

Ein Knoten in einem Kommunikationsnetz empfängt, wie in Fig. 1 gezeigt, über eine Empfangs/Sendeeinheit 1 die an ihn gesendeten Nutz- und Steuerdaten. Die empfangenen Daten werden in den Pufferspeicher 2 eingeschrieben und aus diesen von der zentralen Steuereinheit 3 ausgelesen. Die zentrale Steuereinheit 3 verarbeitet die Daten unter Zugriff auf einen nichtflüchtigen Speicher 4, welcher zum Beispiel Adreßinformationen für die Weiterleitung der empfangenen Nachrichten durch das Netz enthält. Eine weitere Steuereinheit 5, die mit allen Einheiten 1, 2, 3 des Knotens, in denen ein Datenverlust von Testnachrichten und/oder deren Antworten auftreten könnte bzw. die einen solchen Datenverlust registrieren, verbunden ist, übernimmt das zyklische Testen der von der zentralen Steuereinheit 3 zu anderen Knoten aufgebauten Verbindungen. Die Steuereinheit 5 bewertet die Verbindung mittels der über die Empfangs/Sendeeinheit 1 empfangenen Antwort auf die über die zu testende Verbindung gesendete Testnachricht und löst gegebenenfalls den Abbau der Verbindung aus, worauf die zentrale Steuereinheit 3 über andere Knoten eine neue Verbindung aufbaut.

Das erfindungsgemäße Testverfahren wird folgend am Beispiel eines periodischen Link Tests zweier Knoten beim SSNC (Signaling System Network Control) erläutert. Ein Knoten A führt einen zyklischen Verbindungstest zum Beispiel ein "Heartbeat" Test einer Stream Control Transmission Protocol (SCTP)/IP Verbindung oder einer SS7 Verbindung zu einem Knoten B durch. Der Knoten A sendet an den Knoten B über die zu testende Verbindung eine Signalling Link Test Message (SLTM). Der Knoten B empfängt diese Testnachricht und quittiert die empfangene Testnachricht mit einem Signalling Link Test Acknowledgement (SLTA). Diese Quittung wird vom Knoten A empfangen, kann aber wegen zu hohen Nachrichtenaufkommens am Knoten nicht mehr in den Pufferspeicher 2 eingeschrieben werden und wird verworfen.

Die empfangenen Daten werden im Knoten A zur Verarbeitung aus den Pufferspeicher 2 von der zentralen Steuereinheit 3 gelesen. Die Steuereinheit 5 erhält eine Nachricht, daß sich ein Datenverlust während des Verbindungstests im Pufferspeicher 2 ereignet hat und registriert das Ausbleiben der Quittung von dem Knoten B auf die gesendete Testnachricht innerhalb einer vorgegebenen Zeit. Das Ausbleiben von Antworten auf gesendete Testnachrichten wird jedoch nicht bewertet und der Verbindungsabbau aufgrund ausbleibender Antworten nicht ausgelöst, bis der Wegfall der Überlast durch eine erneute Nachricht angezeigt wird. In gleicher Weise wird, wenn die zu sendende Testnachricht aufgrund interner Störungen bereits vor dem Senden im Knoten A verloren geht und deshalb den Knoten B nicht erreicht, eine interne Störung dem Signalling Link Test Prozeß in der Steuereinheit 5 angezeigt und ein Abbau der Verbindung aufgrund der ausbleibenden Antworten nicht auslöst.

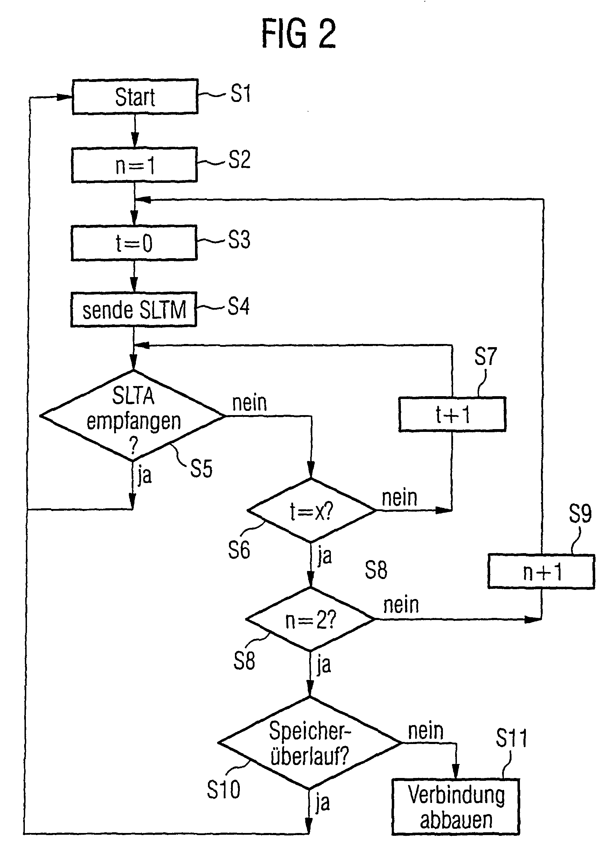

Fig. 2 zeigt ein Beispiel für das erfindungsgemäße Testverfahren in einem Flußdiagramm. Nach dem Start des Verbindungstests im Schritt S1 erfolgt im Schritt S2 eine Initialisierung des Parameters n für die Testwiederholung und im schritt S3 eine Rücksetzung des Parameters t für die Wartezeit bei der Zeitüberwachung. Im Schritt S4 wird die Testnachricht SLTM gesendet und im Schritt S5 der Empfang einer Antwort SLTA auf die Testnachricht SLTM abgefragt. Über eine Warteschleife mittels der Schritte S6 und S7 wird diese Abfrage wiederholt. Ist eine Antwort im Schritt S5 vor dem Zeitpunkt x empfangen worden, wird die empfangene Antwort gegebenenfalls bewertet um Rückschlüsse auf zum Beispiel die Übertragungsgüte und die Datenkonsistenz der Verbindung zu erhalten (nicht gezeigt) und anschließend der Testdurchlauf für einen neuen Start im Schritt S1 beendet. Zur Bewertung der Verbindung kann auch die aufgelaufene Wartezeit t, die die Zeitdauer zwischen dem Senden der Testnachricht und dem Empfangen einer Antwort auf die Testnachricht angibt, genutzt werden. Wird keine Antwort vor einem Zeitpunkt x empfangen wird der Parameter n im Schritt S8 auf den Wert zwei erhöht, die aufgelaufene Wartezeit t im Schritt S3 wieder zurückgesetzt, die Testmeldung SLTM im Schritt S4 erneut gesendet und die beschriebene Prozedur der Abfrage einer empfangenen Antwort auf die erneut gesendete Testmeldung mit den Schritten S5 bis S7 ein zweites Mal gestartet. Ist das Ergebnis am Ende des zweiten Durchlaufs wieder negativ, gelangt der Ablauf zum Schritt S10, in welchem überprüft wird, ob sich ein Speicherüberlauf zum Beispiel im Pufferspeicher 2 ereignet hat. Ist die Überprüfung negativ, wird der Abbau der getesteten Verbindung im Schritt S11 ausgelöst. Wird jedoch im Schritt S10 festgestellt, daß sich ein Speicherüberlauf ereignet hat, wird der Testdurchlauf für einen neuen Start im Schritt S1 beendet und der Abbau der Verbindung nicht ausgelöst.

In dem in Fig. 1 angeführten Beispiel ist die Steuereinheit 5 für den Test von Verbindungen im Knoten separat ausgeführt. Es ist jedoch auch möglich, daß diese Funktionen von der zentralen Steuereinheit 3 ausgeführt bzw. in deren Software integriert werden. Im Rahmen der Erfindung ist ebenfalls möglich, daß für die Bewertung einer Verbindung bzw. die Bewertung über das Ausbleiben einer Antwort auf eine gesendete Testnachricht über die zu testende Verbindung zusätzlich zu den internen Systeminformationen des Knotens auch Systeminformationen des Partnerknotens verwendet werden. So ist es zum Beispiel möglich, daß im Knoten B die von dem Knoten A gesendete Testnachricht aufgrund hohen Nachrichtenaufkommens am Knoten B verloren geht und nicht quittiert werden kann. Sendet zum Beispiel der Knoten B an den Knoten A eine Information, daß ein Nachrichtenverlust eingetreten ist, kann diese Information bei der Bewertung der Verbindung im Knoten A berücksichtigt und ein unnötiger Abbau der Verbindung verhindert werden.

## Patentansprüche

1. Testanordnung für einen ersten eines Kommunikationsnetzes zum Testen von Kommunikationsverbindungen zu anderen Knoten des Kommunikationsnetzes, mit einer Sendeeinheit (1) zum Senden von Testnachrichten (SLTM) an einen zweiten Knoten, einer Empfangseinheit (1) zum Empfangen einer Antwort (SLTA) von dem zweiten Knoten auf eine gesendete Testnachricht (SLTM) und einer Steuereinheit (5) zum Bewerten der Kommunikationsverbindung zu dem zweiten Knoten auf der Grundlage der empfangenen Antwort (SLTA) und Auslösen des Abbaus der Kommunikationsverbindung zu dem zweiten Knoten,
**dadurch gekennzeichnet,**
**dass** die Steuereinheit (5) bei einem Fehlen einer Antwort (SLTA) von dem zweiten Knoten auf die gesendete Testnachricht (SLTM) prüft, ob sich ein Datenverlust während des Tests innerhalb des ersten Knotens ereignet hat und den Abbau der Kommunikationsverbindung bei einem als solchen erkannten Datenverlust nicht auslöst.

2. Testanordnung gemäß Anspruch 1
**dadurch gekennzeichnet,**
**dass** die zu sendende Testnachricht (SLTM) und/oder die empfangene Antwort (SLTA) auf eine gesendete Testnachricht (SLTM) in einem Pufferspeicher (2) gespeichert werden und die Steuereinheit (5) prüft, ob während des Tests ein Speicherüberlauf des Pufferspeichers (2) erfolgt ist.

3. Testanordnung gemäß Anspruch 1 oder 2
**dadurch gekennzeichnet,**
**dass** die Steuereinheit (5) bei einem Fehlen einer Antwort (SLTA) von dem zweiten Knoten auf die gesendete Testnachricht (SLTM) zusätzlich prüft, ob sich ein Datenverlust während des Tests innerhalb des zweiten Knotens ereignet hat und den Abbau der Kommunikationsverbindung bei einem als solchen erkannten Datenverlust im zweiten Knoten nicht auslöst.

4. Testanordnung gemäß Anspruch 3
**dadurch gekennzeichnet,**
**dass** der zweite Knoten an den ersten Knoten eine Nachricht sendet, die anzeigt, daß sich ein Datenverlust im zweiten Knoten ereignet hat.

5. Testverfahren für einem ersten Knoten eines Kommunikationsnetzes zum Testen von Kommunikationsverbindungen zu anderen Knoten des Kommunikationsnetzes mit den Schritten: Senden (S4) einer Testnachricht (SLTM) an einen zweiten Knoten, Empfangen (S5) einer Antwort (SLTA) von dem zweiten Knoten auf die gesendete Testnachricht (SLTM), Bewerten (5) der Kommunikationsverbindung zu dem B-Knoten auf der Grundlage der empfangenen Antwort (SLTA) und Auslösen (S11) des Abbaus der Kommunikationsverbindungen zu dem B-Knoten, wenn die Bewertung (5) zu einem negativen Ergebnis führt,
**dadurch gekennzeichnet,**
**dass** bei einem Fehlen einer Antwort (SLTA) von dem zweiten Knoten auf die gesendete Testnachricht (SLTM) geprüft wird (S10), ob sich ein Datenverlust während des Tests innerhalb des ersten Knotens ereignet hat und der Abbau der Kommunikationsverbindung bei einem as solchen erkannten Datenverlust nicht ausgelöst wird.

6. Testverfahren gemäß Anspruch 5
**dadurch gekennzeichnet,**
**dass** die zu sendende Testnachricht (SLTM) und/oder die empfangene Antwort (SLTA) auf eine gesendete Testnachricht (SLTM) in einem Pufferspeicher (2) gespeichert werden und geprüft wird, ob während des Tests ein Speicherüberlauf erfolgt ist.

7. Testverfahren gemäß Anspruch 5 oder 6
**dadurch gekennzeichnet,**
**dass** bei einem Fehlen einer Antwort (SLTA) von dem zweiten Knoten auf die gesendete Testnachricht (SLTM) zusätzlich geprüft wird, ob sich ein Datenverlust während des Tests innerhalb des zweiten Knotens ereignet hat und der Abbau der Kommunikationsverbindung bei einem als solchen erkannten Datenverlust im zweiten Knoten nicht ausgelöst wird.

8. Testverfahren gemäß Anspruch 7
**dadurch gekennzeichnet,**
**dass** der zweite Knoten an den ersten Knoten eine Nachricht sendet, die anzeigt, daß sich ein Datenverlust im zweiten Knoten ereignet hat.

## Claims

1. A test arrangement for a first node of a communication network for testing communication connections to other nodes in the communication network, having a transmit unit (1) for sending test messages (SLTM) to a second node, a receive unit (1) for receiving a response (SLTA) from the second node to a sent test message (SLTM) and a control unit (5) for evaluating the communication connection to the second node on the basis of the received response (SLTA) and for initiating clearance of the communication connection to the second node,
**characterised in that**
the control unit (5) checks, in the absence of a response (SLTA) from the second node to the sent test message (SLTM), whether a data loss has occurred within the first node during the test, and does not initiate clearance of the communication connection if a data loss as such has been detected.

2. The test arrangement as claimed in Claim 1,
**characterised in that**
the test message (SLTM) to be sent and/or the received response (SLTA) to a sent test message is saved in a buffer memory (2), and the control unit (5) checks whether a memory overflow of the buffer memory (2) has occurred during the test.

3. The test arrangement as claimed in Claim 1 or 2,
**characterised in that**
the control unit (5) additionally checks, in the absence of a response (SLTA) from the second node to the sent test message (SLTM), whether a data loss has occurred within the second node during the test, and does not initiate clearance of the communication connection if a data loss as such has been detected in the second node.

4. The test arrangement as claimed in Claim 3,
**characterised in that**
the second node sends a message to the first node indicating that a data loss has occurred in the second node.

5. A test method for a first node of a communication network for testing communication connections to other nodes in the communication network, comprising the steps: sending (S4) a test message (SLTM) to a second node, receiving (S5) a response (SLTA) from the second node to the sent test message (SLTM), evaluating (5) the communication connection to the B-node on the basis of the received response (SLTA), and initiating (S11) clearance of the communication connections to the B-node if the evaluation (5) produces a negative result,
**characterised in that**
in the absence of a response (SLTA) from the second node to the sent test message (SLTM), a check is made (S10) to see whether a data loss has occurred within the first node during the test, and clearance of the communication connection is not initiated if a data loss as such has been detected.

6. The test method as claimed in Claim 5,
**characterised in that**
the test message (SLTM) to be sent and/or the received response (SLTA) to a sent test message (SLTM) are saved in a buffer memory (2), and a check is made to see whether a memory overflow has occurred during the test.

7. The test method as claimed in Claim 5 or 6,
**characterised in that**
in the absence of a response (SLTA) from the second node to the sent test message (SLTM), an additional check is made to see whether a data loss has occurred within the second node during the test, and clearance of the communication connection is not initiated if a data loss as such has been detected in the second node.

8. The test method as claimed in Claim 7,
**characterised in that**
the second node sends a message to the first node indicating that a data loss has occurred in the second node.

## Revendications

1. Ensemble de test pour un premier noeud d'un réseau de communication pour tester des liaisons de communication vers d'autres noeuds du réseau de communication, comprenant une unité d'émission (1) pour envoyer des messages de test (SLTM) à un deuxième noeud, une unité de réception (1) pour recevoir une réponse (SLTA) du deuxième noeud à un message de test (SLTM) émis et une unité de commande (5) pour évaluer la liaison de communication vers le deuxième noeud sur la base de la réponse reçue (SLTA) et déclencher la fermeture de la liaison de communication vers le deuxième noeud,
**caractérisé en ce que**
l'unité de commande (5), en l'absence d'une réponse (SLTA) du deuxième noeud au message de test (SLTM) émis, contrôle s'il s'est produit pendant le test une perte de données à l'intérieur du premier noeud et ne déclenche pas la fermeture de la liaison de communication en cas de perte de données identifiée en tant que telle.

2. Ensemble de test selon la revendication 1,
**caractérisé en ce que**
le message de test (SLTM) à émettre et/ou la réponse (SLTA) reçue suite à un message de test (SLTM) émis sont enregistrés dans une mémoire tampon (2) et l'unité de commande (5) contrôle s'il s'est produit pendant le test un débordement de mémoire de la mémoire tampon (2).

3. Ensemble de test selon la revendication 1 ou 2,
**caractérisé en ce que**
l'unité de commande (5), en l'absence d'une réponse (SLTA) du deuxième noeud au message de test (SLTM) émis, contrôle additionnellement s'il s'est produit pendant le test une perte de données à l'intérieur du deuxième noeud et ne déclenche pas la fermeture de la liaison de communication en cas de perte de données dans le deuxième noeud, identifiée en tant que telle.

4. Ensemble de test selon la revendication 3,
**caractérisé en ce que**
le deuxième noeud envoie au premier noeud un message indiquant qu'une perte de données s'est produite dans le deuxième noeud.

5. Procédé de test pour un premier noeud d'un réseau de communication pour tester des liaisons de communication vers d'autres noeuds du réseau de communication, comprenant les étapes : émission (S4) d'un message de test (SLTM) vers un deuxième noeud, réception (S5) d'une réponse (SLTA) d'un deuxième noeud au message de test (SLTM) émis, évaluation (5) de la liaison de communication vers le noeud B sur la base de la réponse (SLTA) reçue et déclenchement (S11) de la fermeture des liaisons de communication vers le noeud B si l'évaluation (5) entraîne un résultat négatif,
**caractérisé en ce que**,
en l'absence d'une réponse (SLTA) du deuxième noeud au message de test (SLTM) émis, il est contrôlé (S10) s'il s'est produit pendant le test une perte de données à l'intérieur du premier noeud et la fermeture de la liaison de communication n'est pas déclenchée en cas de perte de données identifiée en tant que telle.

6. Procédé de test selon la revendication 5,
**caractérisé en ce que**
le message de test (SLTM) à émettre et/ou la réponse (SLTA) reçue suite à un message de test (SLTM) émis sont enregistrés dans une mémoire tampon (2) et il est contrôlé s'il s'est produit pendant le test un débordement de mémoire.

7. Procédé de test selon la revendication 5 ou 6,
**caractérisé en ce**
**qu'**en l'absence d'une réponse (SLTA) du deuxième noeud au message de test (SLTM) émis, il est additionnellement contrôlé s'il s'est produit pendant le test une perte de données à l'intérieur du deuxième noeud et la fermeture de la liaison de communication n'est pas déclenchée en cas de perte de données dans le deuxième noeud, identifiée en tant que telle.

8. Procédé de test selon la revendication 7,
**caractérisé en ce que**
le deuxième noeud envoie au premier noeud un message indiquant qu'une perte de données s'est produite dans le deuxième noeud.
